# EUROPEAN PATENT SPECIFICATION

(11) **EP 2 896 858 B1**
(45) Date of publication and mention of the grant of the patent: **03.05.2017**
(21) Application number: 14151581.7
(22) Date of filing: 17.01.2014
(51) Int. Cl.: F16K 31/05

(54) **Valve control actuator**
Ventilsteuerungsaktuator
Actionneur de commande de soupape

(43) Date of publication of application: 22.07.2015
(73) Proprietor: ESBE AB, 333 75 Reftele (SE)
(72) Inventor: Kårhammer, Martin, 33012 FORSHEDA (SE)
(74) Representative: Awapatent AB

(56) References cited:
- US-A- 4 805 870
- US-A1- 2003 030 337
- US-A1- 2012 211 688

## Description

### Field of the Invention

The present invention relates to a valve control actuator for a fluid control valve, the valve control actuator comprising a valve shaft connector arranged for connecting the valve control actuator to a valve control shaft of the fluid control valve and turning the valve control shaft.

The present invention also relates to a method of connecting such a valve control actuator to a fluid control valve.

### Background of the invention

A valve control actuator may be used in combination with a fluid control valve in a domestic heating and/or cooling system.

US 2012/0211688 A1 discloses a valve actuator assembly comprising a valve actuator and a valve having a mounting adapter. A spring element is secured to a housing of the actuator and arranged to lock the actuator to the mounting adapter of the valve.

A drawback of this actuator is that it may be regarded as complicated to connect the actuator to a valve.

US 4 805 870 shows a solenoid operated valve comprising a housing. The housing is received on an enclosure tube which has an open end and a closed end. The closed end of the enclosure tube extends out beyond the outer face of the housing. The closed end of the enclosure tube is provided with a groove being spaced outwardly beyond the outer face of the housing. A spring clip is carried on the outer face of the housing so as to cooperate with the groove on the enclosure tube to secure the housing relative to the enclosure tube.

US 2003/0030337 A1 shows an electric actuator that is attachable to and detachable from a rotary valve. The valve has a valve stem that is connected to a drive shaft of the actuator. The actuator comprises a stopper pin mechanism that prevents the valve and the actuator from being moved relative each other in an axial direction. The stopper pin mechanism comprises a spring-biased stopper pin that is arranged to cooperate with a gear tube of the valve.

### Summary of the Invention

It is an object of the present invention to overcome the above described drawback, and to provide an improved valve control actuator, which allows easy connection thereof to a fluid control valve.

This and other objects that will be apparent from the following summary and description are achieved by a valve control actuator according to the appended claims.

According to one aspect of the present disclosure there is provided a valve control actuator for a fluid control valve, the valve control actuator comprising a valve shaft connector arranged for connecting the valve control actuator to a valve control shaft of the fluid control valve and turning the valve control shaft, wherein the valve shaft connector comprises a connector shaft having an axial opening adapted to receive at least a portion of the valve control shaft, and a resilient locking member extending through at least a portion of said axial opening and arranged to co-operate with a retaining shoulder of said valve control shaft for axial locking of the connector shaft to the valve control shaft.

This valve control actuator may be connected to a fluid control valve simply by pressing the valve control shaft into the connector shaft until the resilient locking member engages a shoulder of the valve control shaft and axially locks the valve control shaft to the connector shaft of the valve control actuator. Hence, the valve control actuator may be connected to a valve control shaft in a very quick and easy manner without using tools. Furthermore, the valve to which the valve control actuator is intended to be connected to do not need to have a separate mounting adapter since the actuator is connected directly to the valve control shaft of the valve. Hence, a valve control actuator having few parts and that allows quick and easy connection to a valve control shaft may be provided. Furthermore, the valve control actuator may also enable easy disconnection of the valve control actuator from a fluid control valve.

According to one embodiment the connector shaft comprises a radial opening in which a portion of the resilient locking member is received in order to enable the resilient locking member to be secured to the connector shaft in a robust manner.

According to one embodiment the resilient locking member is a wire spring. This embodiment has the advantage that a very simple and cost-efficient solution may be provided.

According to one embodiment the wire spring has circular cross-section in order to facilitate locking of the connector shaft to the valve control shaft.

According to one embodiment the resilient locking member partly surrounds the connector shaft in order to enable the resilient locking member to be secured to the connector shaft in an easy manner.

According to one embodiment the resilient locking member is ring-shaped.

According to one embodiment the valve control actuator comprises a stopper device arranged to co-operate with a portion of the fluid control valve for preventing relative rotation between a housing of the valve control actuator and a housing of the fluid control valve.

According to another aspect of the present disclosure there is provided a valve control actuator and fluid control valve combination comprising a valve control actuator according to the present disclosure and a fluid control valve having a valve control shaft provided with a retaining shoulder which is configured to co-operate with the resilient locking member of the valve shaft connector for axial locking of the valve control shaft to the connector shaft.

Hence, a valve control actuator and fluid control valve combination having few parts and that allows quick and easy connection of the valve control actuator to the fluid control valve may be provided. Furthermore, the combination may also enable easy disconnection of the valve control actuator from the fluid control valve.

According to one embodiment the valve control shaft comprises a first guiding surface arranged to guide the resilient locking member towards the retaining shoulder upon connection of the valve control shaft to the connector shaft.

According to one embodiment the valve control shaft comprises a second guiding surface arranged to guide the resilient locking member away from the retaining shoulder upon disconnection of the valve control shaft from the connector shaft.

According to one embodiment the valve control shaft comprises a radial groove configured to receive at least a portion of the resilient locking member.

According to one embodiment the radial groove comprises an oblique or curved side wall. This embodiment has the advantage that the actuator may be disconnected simply by pulling the valve control shaft out of the axial opening of the connector shaft.

According to one embodiment the radial groove comprises a straight side wall.

It is a further object of the present disclosure to provide an improved method of connecting a valve control actuator to a fluid control valve.

This object is achieved by means of a method of connecting a valve control actuator to a fluid control valve, wherein the fluid control valve comprises a valve control shaft provided with a retaining shoulder, and the valve control actuator comprises a connector shaft and a resilient locking member extending through at least a portion of an axial opening of the connector shaft and arranged to co-operate with the retaining shoulder of the valve control shaft for axial locking of the connector shaft to the valve control shaft, the method comprises pressing the valve control shaft into the axial opening of the connector shaft until the resilient locking member engages the retaining shoulder of the valve control shaft, thereby axially locking the valve control shaft to the connector shaft.

These and other aspects of the invention will be apparent from and elucidated with reference to the claims and the embodiments described hereinafter.

### Brief description of the drawings

The invention will now be described in more detail with reference to the appended schematic drawings in which:
Fig. 1 shows, in a perspective view, a valve control actuator according to an embodiment of the present disclosure and a fluid control valve.
Fig. 2 shows, in an exploded perspective view, a valve shaft connector of the valve control actuator shown in Fig. 1.
Fig. 3 shows, in a perspective view, the valve shaft connector shown in Fig. 2.
Fig. 4 shows, in a plane view, the valve shaft connector shown in Fig. 2.
Figs. 5a-c illustrate connection of the valve control actuator shown in Figs. 1-4 to the fluid control valve shown in Fig. 1.

### Description of preferred embodiments

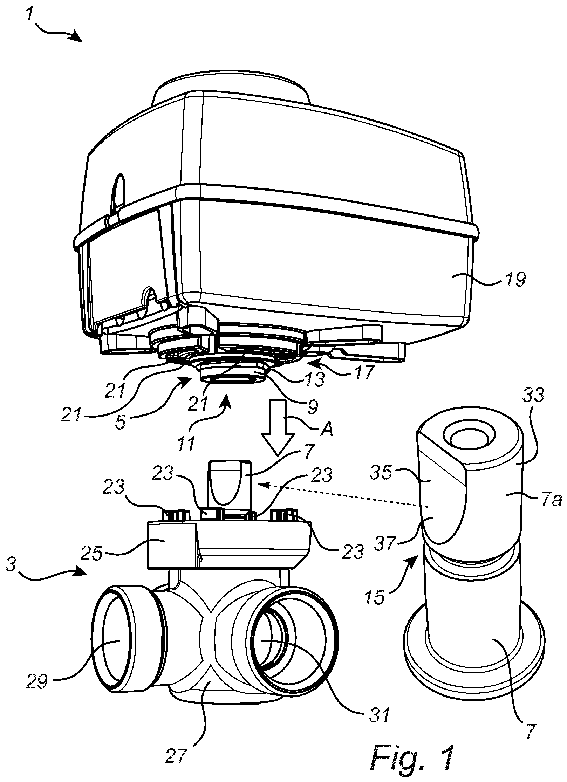

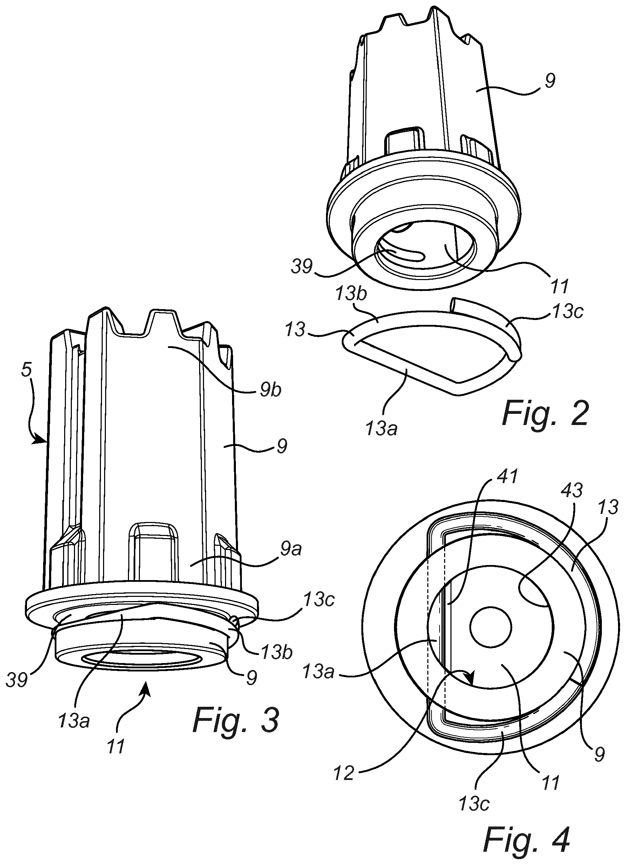

Fig. 1 shows a valve control actuator 1 according to an embodiment of the present disclosure. The valve control actuator 1 is intended to be connected to a fluid control valve 3, as illustrated by the arrow A in Fig. 1. The valve control actuator 1 comprises a valve shaft connector 5 which is arranged for connecting the valve control actuator 1 to a rotatable valve control shaft 7 of the fluid control valve 3. The valve shaft connector 5 comprises a connector shaft 9 having an axial opening 11 configured to receive the valve control shaft 7. At least a portion of the axial opening 11 is non-circular and configured to receive a mating torque transmitting shaft end 7a of the valve control shaft 7. An inner wall 12 (Fig. 4) of the partly hollow connector shaft 9 is thus configured to mate with the torque transmitting valve shaft end 7a of the valve control shaft 7.

The valve shaft connector 5 further comprises a resilient locking member 13, in the form of a ring-shaped wire spring, extending through a portion of the axial opening 11. The resilient locking member 13 is arranged at a first end 9a of the connector shaft 9 and to co-operate with a retaining shoulder 15 of the valve control shaft 7 for axial locking of the connector shaft 9 to the valve control shaft 7.

The valve control actuator 1 further comprises a stopper device 17 for preventing relative rotation between a housing 19 of the valve control actuator 1 and a housing 27 of the fluid control valve 3 to which the actuator 1 is connected. The stopper device 17 is arranged to co-operate with a portion of the fluid control valve 3. The stopper device 17 may, for example, be arranged to co-operate with a portion of the valve housing 27 or with a separate part 25, such as a valve head, secured to the valve housing. In this embodiment the stopper device 17 comprises four hollow protrusions 21, each of which is configured to receive a projecting stud 23 of a plastic valve head 25 form-fittingly secured to the valve housing 27.

The valve control actuator 1 as such is preferably electrically operated and intended to be connected in known manner to, for example, a temperature sensor, which regulates, with the aid of the actuator, the setting and rotating position of the rotatable valve shaft 7.

The fluid control valve 3 comprises a valve housing 27 with multiple valve ports, of which two 29, 31 are visible in Fig. 1, the rotatable valve control shaft 7, a rotor (not shown) and the plastic valve head 25 from which projects the valve control shaft 7. The plastic valve head 25 is form-fittingly secured against rotation to the valve housing 27. The rotor, which is configured for controlling fluid flow through the fluid control valve 3, is secured to the rotatable valve control shaft 7 and rotatably seated in a valve chamber of the valve housing 27 in a known manner. The plastic valve head 25 comprises four projecting studs 23, which are evenly spaced about the valve control shaft 7. Each of the projecting studs 23 is configured to be received in and co-operate with a corresponding one of the hollow protrusions 21 of the stopper device 17 of the valve control actuator 1.

The outer end 7a of the valve control shaft 7 has connecting surfaces 33, 35 arranged to co-operate in non-rotatable manner with the connector shaft 9, which through a second end 9b is arranged to co-operate in non-rotatable manner with an operating shaft (not shown) of the valve control actuator 1. The outer end 7a of the valve control shaft 7 has non-circular cross-section and mates with the axial opening 11 of the connector shaft 9 to enable torque transfer between the connector shaft 9 and the valve control shaft 7. In this embodiment the torque transmitting portion of the valve control shaft 7, i.e. the outer end 7a, has D-shaped cross-section. This shape has the advantage that assembling errors can be avoided since the valve shaft 7 can be connected to the shaft connector 9 only in one way.

The connecting surfaces 33, 35 of the outer valve shaft end 7a comprise a surface portion 37 which is chamfered towards the end of the valve shaft 7 and which forms a first guiding surface for guiding a portion 13a of the resilient locking member 13 towards the retaining shoulder 15 upon connection of the valve control actuator 1 to the valve control shaft 7 of the fluid control valve 3.

With reference to Figs. 2-4 the valve shaft connector 5 will be further described hereinafter. The resilient locking member 13 of the shaft connector 5 extends through a portion of the axial opening 11 of the connector shaft 5, as best illustrated in Fig. 4. A first portion 13a of the resilient locking member 13 is received in a radial opening 39 of the connector shaft 9, as best illustrated in Fig. 3. A second portion 13b and a third portion 13c of the resilient locking member 13 surround the connector shaft 9. The first locking member portion 13a is arranged to co-operate with a retaining shoulder 15 of the valve control shaft 7 to which the actuator 1 is connected for axial locking of the connector shaft 9 to the valve control shaft 7. In this embodiment the resilient locking member 13 is constituted by a wire spring with circular cross-section. The circular cross-section facilitates connection and disconnection of the valve control actuator 1.

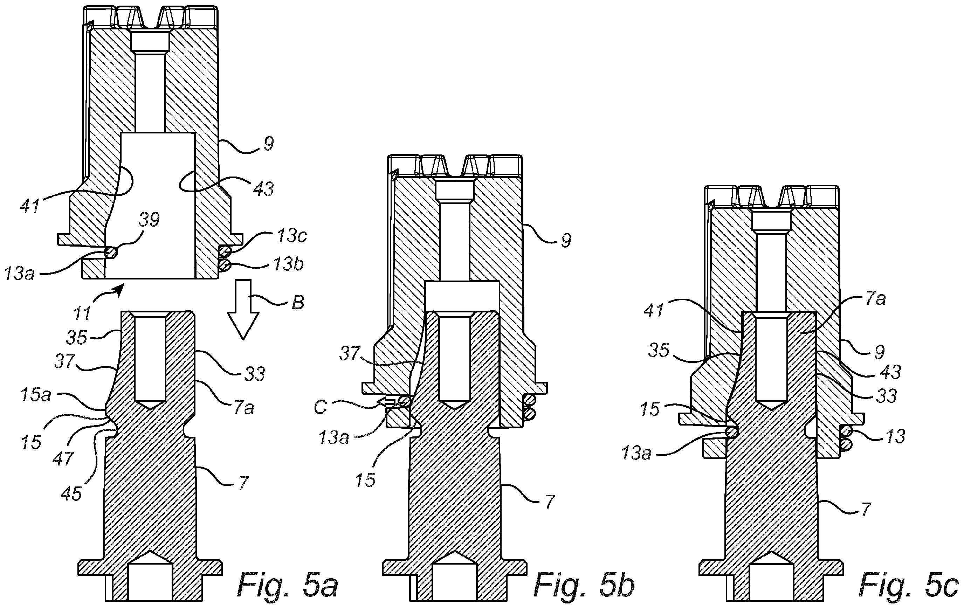

The axial opening 11 is arranged to co-operate by form fit in non-rotatable manner with the connecting surfaces 33, 35 of the outer end 7a of the valve control shaft 7. An inner wall 12 of the partly hollow connector shaft 9 is thus configured to mate with the torque transmitting valve shaft end 7a. To this end the inner wall 12 of the connector shaft 9 comprises connecting surfaces 41, 43 (Fig. 4), that mate with the connecting surfaces 33, 35 (Fig. 1) of the valve control shaft 7, as illustrated in Fig. 5c. In this embodiment the axial opening 11 is thus partly D-shaped to mate with the portion of the valve control shaft end 7a having D-shaped cross-section. It is however realized that the axial opening may have another non-circular shape, such as, for example, a rectangular or triangular shape, configured to receive a mating torque transmitting end of a valve control shaft.

With reference to Figs. 5a-c connection of the valve control actuator 1 to the valve shaft 7 of the fluid control valve 3 will be described hereinafter. Upon connection of the valve control actuator 1 to the valve shaft 7 of the fluid control valve 3 the valve control shaft 7 is pressed into the axial opening 11 of the connector shaft 9, as illustrated by the arrow B in Fig. 5a. The valve control shaft 7 is pressed into the axial opening 11 until the first portion 13a of the resilient locking member 13 engages the shoulder 15 of the valve control shaft 7. As the valve control shaft 7 is pressed into the axial opening 11 the first guiding surface 37 guides the first portion 13a of the resilient locking member 13 towards the retaining shoulder 15 and forces the ring-shaped resilient locking member 13 to slide along the first guiding surface and to temporarily expand radially, as illustrated by the arrow C in Fig. 5b. When the resilient locking member has been moved past the widest portion 15a of the retaining shoulder 15 it may return to an unexpanded state, illustrated in Fig. 5c, by its inherent resiliency, in which state the resilient locking member 13 locks the control shaft 7 to the connector shaft 9. Fig. 5c illustrates the shaft connector 5 in a locked state in which the connector shaft 9 is axially locked to the valve control shaft 7 by the resilient locking member 13.

In this embodiment the retaining shoulder 15 is partly formed by a radial groove 45 formed in the valve control shaft 7. The radial groove 45 comprises a shoulder surface 47, in this case in the form of an oblique surface, which form a part of the retaining shoulder 15. The shoulder surface 47 facilitates disconnection of the valve control actuator 1 from the valve control shaft 7. Hence, the second guiding surface 47 not only prevents releasing of the valve control actuator 1 when connected to the valve 3, but also enables the valve control actuator 1 to be disconnected from the valve shaft 7 in an easy manner by pulling the valve shaft 7 out of the axial opening 11. As the valve control shaft 7 is pulled out of the axial opening 11 of the connector shaft 9 the second guiding surface 47 guides the first locking member portion 13a and forces the resilient locking member 13 to expand radially, thereby enabling disconnection of the connector shaft 9 from the valve control shaft 7. The force required to disconnect the actuator 1 from the valve control shaft 7 by pulling the valve control shaft 7 out of the axial opening 11 of the connector shaft 9 is determined by the shape of the second guiding surface 47. Hence, the second guiding surface 47 may be adapted to disconnection of the actuator 1 from the valve 3 at a predetermined pulling force.

In an alternative embodiment (not shown) a portion of the retaining shoulder 15 forms a part of a radial groove formed in the valve control shaft 7 and comprising a straight side wall instead of an oblique side wall. In this embodiment disconnection of the actuator 1 only by pulling the valve control shaft 7 is prevented by the straight side wall.

A method of connecting a valve control actuator 1 of the present disclosure to a fluid control valve 3 thus comprises pressing a valve control shaft 7 of the fluid control valve 3 into the axial opening 11 of the connector shaft 9 until the resilient locking member 13 engages a shoulder 15 of the valve control shaft 7, thereby axially locking the connector shaft to 9 the valve shaft 7.

It will be appreciated that numerous variants of the embodiments described above are possible within the scope of the appended claims.

Hereinbefore, with reference to Fig. 1 and Figs. 5a-c, is has been described that the valve control shaft 7 has a groove 45 forming a part of the retaining shoulder 15. It is appreciated that a retaining shoulder instead may be formed by a projecting portion, such as e.g. a flange, of the valve shaft.

It is obvious that the layout of the fluid control valve 3 described above can be varied in different ways. For instance, the number of ports of a fluid control valve can be three, as described hereinbefore with reference to Fig. 1, or two or exceed the number of three.

## Claims

1. Valve control actuator for a fluid control valve (3), the valve control actuator comprising a valve shaft connector (5) arranged for connecting the valve control actuator (1) to a valve control shaft (7) of the fluid control valve (3) and turning the valve control shaft (7), the valve shaft connector (5) comprising:
a connector shaft (9) having an axial opening (11) adapted to receive at least a portion (7a) of the valve control shaft (7), and
a resilient locking member (13),
**characterized in that**
the resilient locking member extends through at least a portion of said axial opening (11) and is arranged to co-operate with a retaining shoulder (15) of said valve control shaft (7) for axial locking of the connector shaft (9) to the valve control shaft (7).

2. Valve control actuator according to claim 1, wherein the connector shaft (9) comprises a radial opening (39) in which a first portion (13a) of the resilient locking member (13) is received.

3. Valve control actuator according to any of the preceding claims, wherein the resilient locking member (13) is a wire spring.

4. Valve control actuator according to claim 3, wherein the wire spring (13) has circular cross-section.

5. Valve control actuator according to any of the preceding claims, wherein the resilient locking member (13b, 13c) partly surrounds the connector shaft (9).

6. Valve control actuator according to any one of the preceding claims, wherein the resilient locking member (13) is ring-shaped.

7. Valve control actuator according to any of the preceding claims, wherein the valve control actuator (1) comprises a stopper device (17, 21) arranged to co-operate with a portion (23) of the fluid control valve (3) for preventing relative rotation between a housing (19) of the valve control actuator (1) and a housing (27) of the fluid control valve (3).

8. Valve control actuator and fluid control valve combination comprising a valve control actuator (1) according to any of the preceding claims and a fluid control valve (3) having a valve control shaft (7) provided with a retaining shoulder (15) which is configured to co-operate with the resilient locking member (13) of the valve shaft connector (5) for axial locking of the valve control shaft (7) to the connector shaft (9).

9. Valve control actuator and fluid control valve combination according to claim 8, wherein the valve control shaft (7) comprises a first guiding surface (35) arranged to guide the resilient locking member (13) towards the retaining shoulder (15) upon connection of the valve control shaft (7) to the connector shaft (9).

10. Valve control actuator and fluid control valve combination according to any of the claims 8-9, wherein valve control shaft (7) comprises a second guiding surface (47) arranged to guide the resilient locking member (13) away from the retaining shoulder (15) upon disconnection of the valve control shaft (7) from the connector shaft (9).

11. Valve control actuator and fluid control valve combination according to any of the claims 8-10, wherein the valve control shaft (7) comprises a radial groove (45) configured to receive at least a portion (13a) of the resilient locking member (13).

12. Method of connecting a valve control actuator (1) to a fluid control valve (3), wherein
the fluid control valve (3) comprises a valve control shaft (7) provided with a retaining shoulder (15), and
the valve control actuator (1) comprises a connector shaft (9) and a resilient locking member (13) extending through at least a portion of an axial opening (11) of the connector shaft (9) and arranged to co-operate with the retaining shoulder (15) of the valve control shaft (7) for axial locking of the connector shaft (9) to the valve control shaft (7),
the method comprises:
pressing the valve control shaft (7) into the axial opening (11) of the connector shaft (9) until the resilient locking member (13) engages the retaining shoulder (15) of the valve control shaft (7), thereby axially locking the valve control shaft (7) to the connector shaft (9).

## Patentansprüche

1. Betätigungselement einer Ventilsteuerung für ein Fluidsteuerventil (3), wobei das Betätigungselement der Ventilsteuerung eine Ventilwellenverbindung (5) umfasst, der zur Verbindung des Betätigungselements (1) der Ventilsteuerung mit einer Ventilsteuerwelle (7) des Fluidsteuerventils (3) und zum Drehen der Ventilsteuerwelle (7) angeordnet ist,
wobei die Ventilwellenverbindung (5) Folgendes umfasst:
eine Verbindungswelle (9), die eine axiale Öffnung (11) aufweist, die zur Aufnahme von mindestens einem Abschnitt (7a) der Ventilsteuerwelle (7) geeignet ist, und
ein federndes Verriegelungselement (13),
**dadurch gekennzeichnet, dass**
das federnde Verriegelungselement sich durch mindestens einen Abschnitt der axialen Öffnung (11) erstreckt und zum Zusammenwirken mit einer Halteschulter (15) der Ventilsteuerwelle (7) zur axialen Verriegelung der Verbindungswelle (9) mit der Ventilsteuerwelle (7) angeordnet ist.

2. Betätigungselement einer Ventilsteuerung nach Anspruch 1, wobei die Verbindungswelle (9) eine radiale Öffnung (39) umfasst, in der ein erster Abschnitt (13a) des federnden Verriegelungselements (13) aufgenommen ist.

3. Betätigungselement einer Ventilsteuerung nach einem der vorhergehenden Ansprüche, wobei das federnde Verriegelungselement (13) eine Drahtfeder ist.

4. Betätigungselement einer Ventilsteuerung nach Anspruch 3, wobei die Drahtfeder (13) einen kreisförmigen Querschnitt aufweist.

5. Betätigungselement einer Ventilsteuerung nach einem der vorhergehenden Ansprüche, wobei das federnde Verriegelungselement (13b, 13c) teilweise die Verbindungswelle (9) umgibt.

6. Betätigungselement einer Ventilsteuerung nach einem der vorhergehenden Ansprüche, wobei das federnde Verriegelungselement (13) ringförmig ist.

7. Betätigungselement einer Ventilsteuerung nach einem der vorhergehenden Ansprüche, wobei das Betätigungselement der Ventilsteuerung (1) eine Verschlussvorrichtung (17, 21) umfasst, die zum Zusammenwirken mit einem Abschnitt (23) des Fluidsteuerventils (3) zur Verhinderung einer relativen Rotation zwischen einem Gehäuse (19) des Betätigungselements der Ventilsteuerung (1) und einem Gehäuse (27) des Fluidsteuerventils (3) angeordnet ist.

8. Kombination aus einem Betätigungselement einer Ventilsteuerung und einem Fluidsteuerventil, umfassend ein Betätigungselement einer Ventilsteuerung (1) nach einem der vorhergehenden Ansprüche und ein Fluidsteuerventil (3), das eine Ventilsteuerwelle (7) aufweist, die mit einer Halteschulter (15) versehen ist, die konfiguriert ist, mit dem federnden Verschlusselement (13) der Ventilwellenverbindung (5) zur axialen Verriegelung der Ventilsteuerwelle (7) mit der Verbindungswelle (9) zusammenzuwirken.

9. Kombination aus einem Betätigungselement einer Ventilsteuerung und einem Fluidsteuerventil nach Anspruch 8, wobei die Ventilsteuerwelle (7) eine erste Führungsfläche (35) umfasst, die zur Führung des federnden Verschlusselements (13) zu der Halteschulter (15) hin nach Verbindung der Ventilsteuerwelle (7) mit der Verbindungswelle (9) angeordnet ist.

10. Kombination aus einem Betätigungselement einer Ventilsteuerung und einem Fluidsteuerventil nach einem der Ansprüche 8-9, wobei die Ventilsteuerwelle (7) eine zweite Führungsfläche (47) umfasst, die zur Führung des federnden Verschlusselements (13) von der Halteschulter (15) weg nach Trennung der Ventilsteuerwelle (7) von der Verbindungswelle (9) angeordnet ist.

11. Kombination aus einem Betätigungselement einer Ventilsteuerung und einem Fluidsteuerventil nach einem der Ansprüche 8-10, wobei die Ventilsteuerwelle (7) eine radiale Nut (45) umfasst, die um mindestens einen Abschnitt (13a) des federnden Verriegelungselements (13) aufzunehmen konfiguriert ist.

12. Verfahren zur Verbindung eines Betätigungselements einer Ventilsteuerung (1) einem Fluidsteuerventil (3), wobei
das Fluidsteuerventil (3) eine Ventilsteuerwelle (7) umfasst, die mit einer Halteschulter (15) versehen ist, und
das Betätigungselement der Ventilsteuerung (1) eine Verbindungswelle (9) und ein federndes Verriegelungselement (13) umfasst, das sich durch mindestens einen Abschnitt einer axialen Öffnung (11) der Verbindungswelle (9) erstreckt und zum Zusammenwirken mit der Halteschulter (15) der Ventilsteuerwelle (7) zur axialen Verriegelung der Verbindungswelle (9) mit der Ventilsteuerwelle (7) angeordnet ist,
wobei das Verfahren Folgendes umfasst:
Drücken der Ventilsteuerwelle (7) in die axiale Öffnung (11) der Verbindungswelle (9), bis das federnde Verriegelungselement (13) mit der Halteschulter (15) der Ventilsteuerwelle (7) in Eingriff gelangt, sodass die Ventilsteuerwelle (7) axial mit der Verbindungswelle (9) verriegelt wird.

## Revendications

1. Actionneur de commande de soupape pour une soupape de régulation de fluide (3), l'actionneur de commande de soupape comprenant un connecteur d'arbre de soupape (5) agencé pour connecter l'actionneur de commande de soupape (1) à un arbre de commande de soupape (7) de la soupape de régulation de fluide (3) et tourner l'arbre de commande de soupape (7),
le connecteur d'arbre de soupape (5) comprenant :
un arbre de liaison (9) présentant une ouverture axiale (11) adaptée pour recevoir au moins une partie (7a) de l'arbre de commande de soupape (7), et
un élément de verrouillage résilient (13),
**caractérisé en ce que**
l'élément de verrouillage résilient s'étend à travers au moins une partie de ladite ouverture axiale (11) et est agencé pour coopérer avec un épaulement de retenue (15) de ledit arbre de commande de soupape (7) pour un verrouillage axial de l'arbre de liaison (9) sur l'arbre de commande de soupape (7).

2. Actionneur de commande de soupape selon la revendication 1, dans lequel l'arbre de liaison (9) comprend une ouverture radiale (39) dans laquelle une première partie (13a) de l'élément de verrouillage résilient (13) est reçue.

3. Actionneur de commande de soupape selon l'une quelconque des revendications précédentes, dans lequel l'élément de verrouillage résilient (13) est un ressort à câble.

4. Actionneur de commande de soupape selon la revendication 3, dans lequel le ressort à câble (13) a une section circulaire.

5. Actionneur de commande de soupape selon l'une quelconque des revendications précédentes, dans lequel l'élément de verrouillage résilient (13b, 13c) entoure partiellement l'arbre de liaison (9).

6. Actionneur de commande de soupape selon l'une quelconque des revendications précédentes, dans lequel l'élément de verrouillage résilient (13) a une forme annulaire.

7. Actionneur de commande de soupape selon l'une quelconque des revendications précédentes, dans lequel l'actionneur de commande de soupape (1) comprend un dispositif de butée (17, 21) agencé pour coopérer avec une partie (23) de la soupape de régulation de fluide (3) pour éviter la rotation relative entre un logement (19) de l'actionneur de commande de soupape (1) et un logement (27) de la soupape de régulation de fluide (3).

8. Combinaison d'un actionneur de commande de soupape et d'une soupape de régulation de fluide comprenant un actionneur de commande de soupape (1) selon l'une quelconque des revendications précédentes et une soupape de régulation de fluide (3) présentant un arbre de commande de soupape (7) dotée d'un épaulement de retenue (15) qui est configuré pour coopérer avec l'élément de verrouillage résilient (13) du connecteur d'arbre de soupape (5) pour le verrouillage axial de l'arbre de commande de soupape (7) sur l'arbre de liaison (9).

9. Combinaison d'un actionneur de commande de soupape et d'une soupape de régulation de fluide selon la revendication 8, dans laquelle l'arbre de commande de soupape (7) comprend une première surface de guidage (35) agencée pour guider l'élément de verrouillage résilient (13) en direction de l'épaulement de retenue (15) lors de la connexion de l'arbre de commande de soupape (7) sur l'arbre de liaison (9).

10. Combinaison d'un actionneur de commande de soupape et d'une soupape de réculation de fluide selon l'une quelconque des revendications 8-9, dans laquelle l'arbre de commande de soupape (7) comprend une deuxième surface de guidage (47) agencée pour guider l'élément de verrouillage résilient (13) à distance de l'épaulement de retenue (15) lors de la déconnexion de l'arbre de commande de soupape (7) de l'arbre de liaison (9).

11. Combinaison d'un actionneur de commande de soupape et d'une soupape de régulation de fluide selon l'une quelconque des revendications 8-10, dans laquelle l'arbre de commande de soupape (7) comprend une rainure radiale (45) configurée pour recevoir au moins une partie (13a) de l'élément de verrouillage résilient (13).

12. Procédé de connexion d'un actionneur de commande de soupape (1) à une soupape de commande de fluide (3), dans lequel
la soupape de régulation de fluide (3) comprend un arbre de commande de soupape (7) dotée d'un épaulement de retenue (15), et
l'actionneur de commande de soupape (1) comprend un arbre de liaison (9) et un élément de verrouillage résilient (13) s'étendant à travers au moins une partie d'une ouverture axiale (11) de l'arbre de liaison (9) et agencée pour coopérer avec l'épaulement de retenue (15) de l'arbre de commande de soupape (7) pour un verrouillage axial de l'arbre de liaison (9) sur l'arbre de commande de soupape (7),
le procédé comprend :
la compression de l'arbre de commande de soupape (7) dans l'ouverture axiale (11) de l'arbre de liaison (9) jusqu'à ce que l'élément de verrouillage résilient (13) engage l'épaulement de retenue (15) de l'arbre de commande de soupape (7), verrouillant ainsi axialement l'arbre de commande de soupape (7) sur l'arbre de liaison (9).
